# EUROPEAN PATENT SPECIFICATION

(11) **EP 2 165 859 B1**
(45) Date of publication and mention of the grant of the patent: **20.06.2012**
(21) Application number: 09003517.1
(22) Date of filing: 11.03.2009
(51) Int. Cl.: B60C 11/16

(54) **Pneumatic tire**
Luftreifen
Pneu

(30) Priority: 18.09.2008 JP 2008239758
(43) Date of publication of application: 24.03.2010
(73) Proprietor: The Yokohama Rubber Co., Ltd., Minato-ku Tokyo 105-8685 (JP)
(72) Inventor: Sato, Kenichi, Tokyo 105-8685 (JP); Nakazaki, Keisuke, Hiratsuka-shi Kanagawa 254-8601 (JP)
(74) Representative: HOFFMANN EITLE

(56) References cited:
- DE-A1- 1 480 946
- JP-A- 59 096 005

## Description

### Technical Field

The present invention relates to a pneumatic tire in which studs may be embedded in a tread portion.

### Background Art

Studded tires are one of the most preferred tires for winter-season tires (see, for example, EP-1088685-A2 and EP-1129869-A2) in a region where the climate in winter is quite severe--for example, in Russia and in Nordic countries. In conventional studded tires, for the purpose of giving sufficient stiffness to the areas surrounding the studs, sipes are not formed in the positions where the studs are to be affixed (hereafter, simply referred to as "stud affixing positions") stud affixing positions and peripheries thereof in the tread portion, and the studs are affixed to the affixing positions that have been determined in advance. It is, however, difficult to pinpoint the stud affixing positions in the tread portion. As a consequence, studs are sometimes affixed to wrong positions offset from the predetermined positions, or even fail to be affixed. For this reason, the stud affixing positions need to be made more visible.

Incidentally, the studs embedded in the tread portion have a decisive influence on the performance of the stud tire. The dropping-off of studs significantly impairs the on-ice performance of the tire. For this reason, development of measures to prevent the dropping-off of the studs remains to be critical challenge for the manufacturers of studded tires.

DE 1480946 discloses a combination of features that falls within the scope of the preamble of Claim 1.

### Summary of the Invention

According to the present invention, there is provided a pneumatic tire in which a stud may be embedded in a tread portion, the pneumatic tire comprising: a stud affixing position that is located in the tread portion characterized in that a plurality of protruding portions that are formed to surround, in a ring shape, the stud affixing position, wherein wherein each of the protruding portions has a height between 0.2 mm and 1.0 mm inclusive from a tread surface of the tire.

Embodiments of the present invention can provide a pneumatic tire capable of improving the visibility of the stud affixing positions and capable of enhancing the ability to hold studs.

Since the plural protruding portions are formed to surround, in a ring shape, the stud affixing position, the protruding portions help to improve the visibility of the stud affixing position. Accordingly, the stud can be affixed correctly to the predetermined affixing position; and the failure to affix the stud can be prevented.

The plural protruding portions that surround the stud affixing position have an effect of enhancing the stiffness of the portion, so that the stud holding ability can be enhanced and the dropping-off of the stud can be prevented. In addition, the plural protruding portions that surround the stud affixing position have a secondary effect--which is attributable to the edge effect thereof--of enhancing the initial braking performance of the tire.

It is preferable that each of the protruding portions be a small piece with an arc shape or a shape extending radially. The use of the protruding portions each of which is an arc-shaped or radially-extending-shaped small piece renders the visibility of the stud affixing position more favorable.

It is preferable that the protruding portions be located in an area that has a distance from the outer-end position of the stud of 5 mm or smaller. A wider location area for the protruding portions renders the stud affixing position more visible, but the sipes have to be removed from the wider area, so that the drainage effect has to be sacrificed. The above-mentioned setting of the location area of the protruding portions, however, allows both an improvement in the visibility and the securing of the sipes to be achieved at the same time.

It is preferable that the height of each protruding portion from the tread surface of the tire be in a range from 0.2 mm to 1.0 mm inclusive. A higher protruding portion improves the visibility of the stud affixing position, but impedes the contact of the stud with the road. The above-mentioned setting of the height of each protruding portion, however, allows both an improvement in the visibility and an improvement in the contact of the stud with the road to be achieved at the same time.

It is preferable that the at least two different heights from the tread surface of the tire be given to the protruding portions. When some of the protruding portions have different heights from others in this way, different shadows are formed by the different protruding portions. This improves the visibility of the stud affixing position.

It is preferable that the protruding portions together form a protruding-portion aggregate that has any one of a circular-shaped contour and a polygon-shaped contour. The protruding-portion aggregate with the above-mentioned shape improves the visibility of the stud affixing portion and, at the same time, contributes to the excellence in the design of the tread portion.
The present invention is applicable to various types of studded tires. To be more specific, it is preferable to apply the present invention to a pneumatic tire including: a plurality of longitudinal grooves that are formed in the tread portion so as to extend in the circumferential direction of the tire; a plurality of lateral grooves that are formed in the tread portion so as to extend in the tire width direction; a plurality of blocks which are separated by the longitudinal grooves and by the lateral grooves and in any of which the stud affixing positions are located; and a plurality of sipes formed in each of the blocks at positions offset from the stud affixing position.

### Brief Description of the Drawings

To enable a better understanding of the present invention and to show how the same may be carried into effect, reference will now be made, by way of example only, to the accompanying drawings.
Fig. 1 is a development view illustrating a tread pattern (before the affixing of studs) of a pneumatic tire according to an embodiment of the present invention.
Fig. 2 is a development view illustrating a tread pattern (after the affixing of studs) of a pneumatic tire according to the embodiment of the present invention.
Fig. 3 is a plan view illustrating, in an enlarged manner, plural protruding portions surrounding one of the stud affixing positions shown in Fig. 1.
Fig. 4 is a plan view illustrating, in an enlarged manner, plural protruding portions surrounding one of the studs shown in Fig. 2.
Fig. 5 is a sectional view of Fig. 4.
Fig. 6 is a sectional view illustrating protruding portions in a modified example of the present invention.
Fig. 7 is a plan view illustrating protruding portions in a modified example of the present invention.
Fig. 8 is a plan view illustrating protruding portions in a modified example of the present invention.
Fig. 9 is a plan view illustrating protruding portions in a modified example of the present invention.
Fig. 10 is a plan view illustrating protruding portions in a modified example of the present invention.
Fig. 11 is a plan view illustrating protruding portions in a modified example of the present invention.
Fig. 12 is a plan view illustrating protruding portions in a modified example of the present invention.
Fig. 13 is a plan view illustrating protruding portions in a modified example of the present invention.
Fig. 14 is a plan view illustrating protruding portions in a modified example of the present invention.
Fig. 15 is a plan view illustrating protruding portions in a modified example of the present invention.

### Detailed Description of the Preferred Embodiments

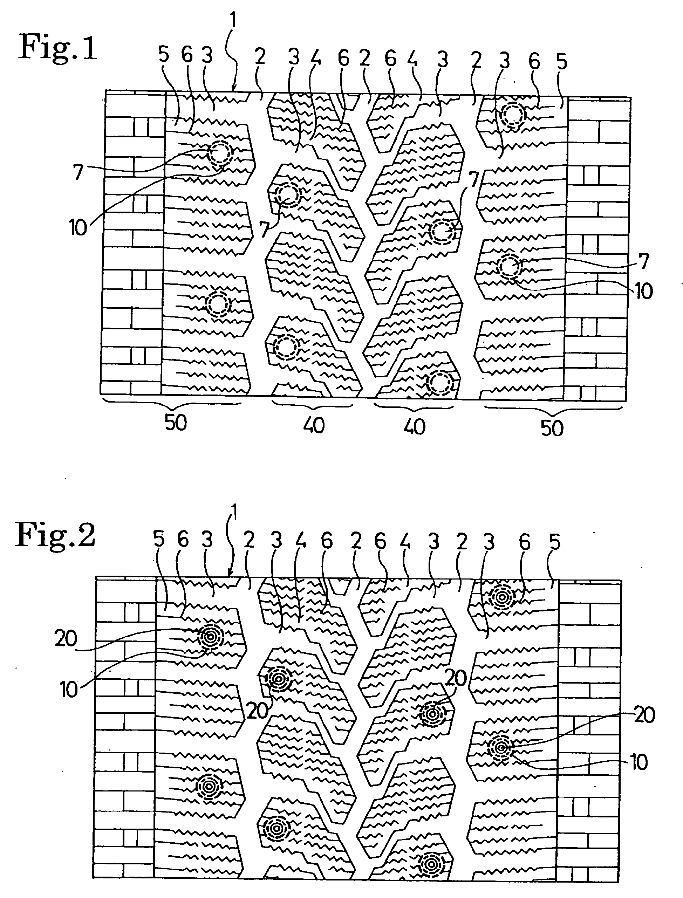

A configuration of the present invention will be described in detail below with reference to the accompanying drawings. Fig. 1 illustrates a tread pattern (before the affixing of studs) of a pneumatic tire according to an embodiment of the present invention. Fig. 2 illustrates a tread pattern (after the affixing of studs) of a pneumatic tire according to the embodiment of the present invention.

As shown in Figs. 1 and 2, plural longitudinal grooves2, each of which extends in the circumferential direction of the tire in a zigzag manner, and plural lateral grooves 3, each of which extends in the tire-width direction, are formed in a tread portion 1. These longitudinal grooves 2 and lateral grooves 3 separate plural blocks 4 and blocks 5. Block rows 40, each of which includes the blocks 4, are formed on the tread-center side of the tire. Block rows 50, each of which includes the blocks 5, are formed on the shoulder sides of the tire.

Plural sipes 6, each of which extends in a zigzag manner in the tire-width direction, are formed in each of the blocks 4 included in the block rows 40 on the tread-center side and in each of the blocks 5 included in the block rows on the shoulder sides. Some of the blocks 4 and 5 are designed to have stud affixing positions 7. In each of the blocks 4 and 5 with the stud affixing positions 7, the sipes 6 are arranged to avoid its stud affixing position 7. In addition, on the surface of the tread of each of the blocks 4 and 5 with the stud affixing positions 7, plural protruding portions 10 are formed to surround, in a ring shape, its stud affixing position 7.

Fig. 2 shows that studs 20 are affixed respectively to the stud affixing positions 7 in the blocks 4 and 5. Note that implant holes may be formed respectively at the stud affixing positions 7 during the curing process of the tire, or implant holes may be drilled after the curing process of the tire. Each of the studs 20 is embedded in the following way. The implant hole is firstly expanded widely, then the stud 20 is inserted into the expanded implant hole, and then the expansion of the implant hole is cancelled.

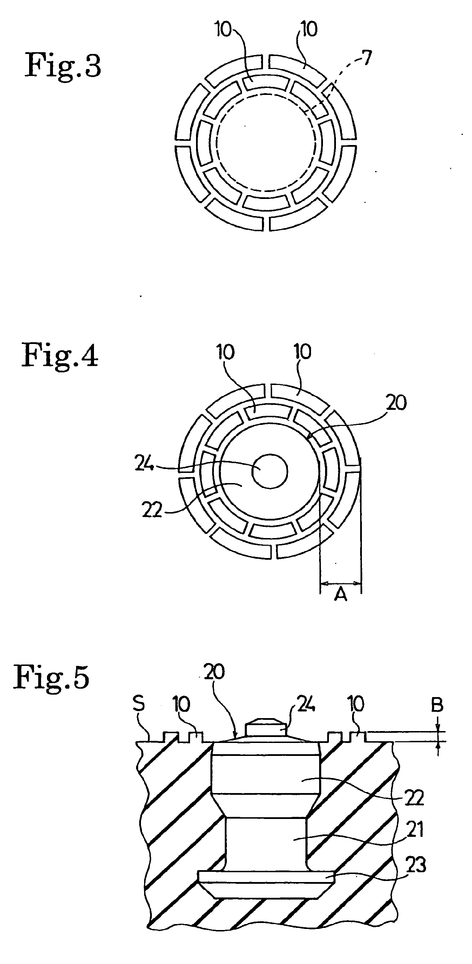

Fig. 3 is a plan view illustrating, in an enlarged manner, plural protruding portions surrounding one of the stud affixing positions shown in Fig. 1. Fig. 4 is a plan view illustrating, in an enlarged manner, plural protruding portions surrounding one of the studs shown in Fig. 2. Fig. 5 is a sectional view of Fig. 4. Fig. 3 shows that each of the protruding portions 10 is a small arc-shaped piece. The plural protruding portions 10 together form a protruding-portion aggregate with substantially circular-shaped inner-side and outer-side contours.

Figs. 4 and 5 show that each of the studs 20 include: a columnar-shaped body portion 21; a flange portion 22 formed on the tread side of the body portion 21 and having a larger diameter than that of the body portion 21; a flange portion 23 formed on the bottom side of the body portion 21 and having a larger diameter than that of the body portion 21; and a tip portion 24 sticking out from the flange portion 22 on the tread side in the axial direction of the stud.

In the above-described pneumatic tire, the plural protruding portions 10 are formed to surround, in a ring shape, each of the stud affixing positions 7. These plural protruding portions 10 contribute to an improvement in the visibility of the stud affixing position 7. Accordingly, when each stud 20 is affixed to the corresponding stud affixing position 7, the stud 20 can be affixed to the predetermined stud affixing position 7 easily so that the failure of the affixing of stud can be prevented.

In addition, the plural protruding portions 10 that surround each of the stud affixing positions 7 have an effect of enhancing the stiffness of the area, so that the ability to hold the stud can be enhanced and the dropping-off of the stud can be prevented. Moreover, since the plural protruding portions 10 are formed to surround each of the stud affixing positions 7, the edge effect of the protruding portions 10 can enhance the initial braking performance of the tire.

As shown in Fig. 4, each of the protruding portions 10 may preferably be placed within an area such that the distance from the outer-end position of the exposed portion of the corresponding stud 20 (the distance is denoted by the symbol A in Fig. 4) is not longer than 5 mm. Accordingly, an improvement in the visibility of the stud affixing positions can be obtained and, at the same time, the securing of the sipes 6 can be obtained. In contrast, if the protruding portions 10 are placed in an area such that the distance A exceeds 5 mm, the area from which the sipes 6 are removed increases. Such an increase, if it occurs, impairs the drainage effect.

As shown in Fig. 5, the height B of each protruding portion 10 from the tread surface (the surface is denoted by the symbol S in Fig. 5) may preferably be set at a range from 0.2 mm to 1. 0 mm. Accordingly, an improvement in the visibility of the stud affixing positions 7 can be obtained and, at the same time, the contact of the stud 20 with the road can be enhanced. If the height B is less than 0.2 mm, the visibility is impaired. Conversely, the height B in excess of 1.0 mm impedes the contact of the stud 20 with the road.

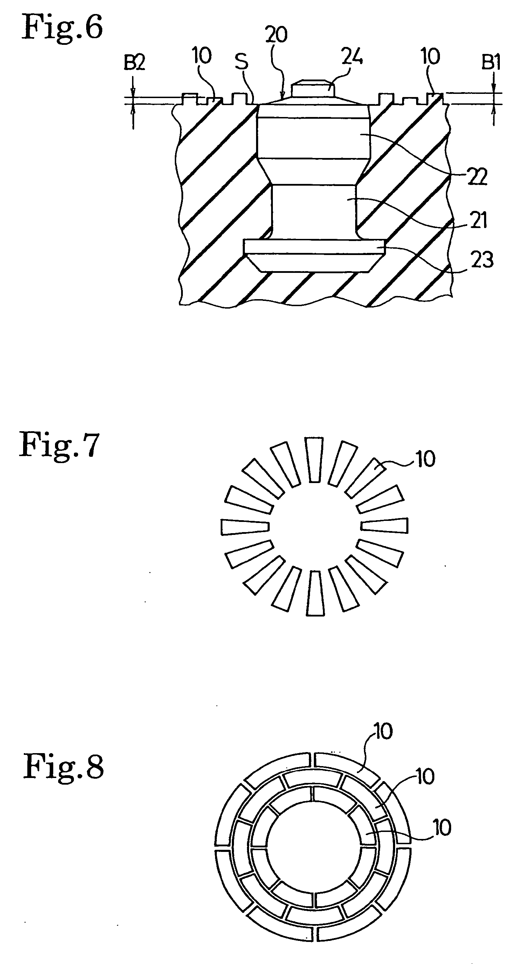

Fig. 6 is a sectional view illustrating protruding portions in a modified example of the present invention. Fig. 6 shows that some of the protruding portions 10 have a height *B1* from the surface S of the tread of the tire while the other protruding portions 10 have a height B2 from the surface S of the tread of the tire. Note that B1 > B2. At least two different heights of the protruding portions 10 result in different shapes of shadows depending on the heights of the protruding portions when the tread portion 1 is viewed from above. Accordingly, the visibility of the stud affixing portion 7 can be improved.

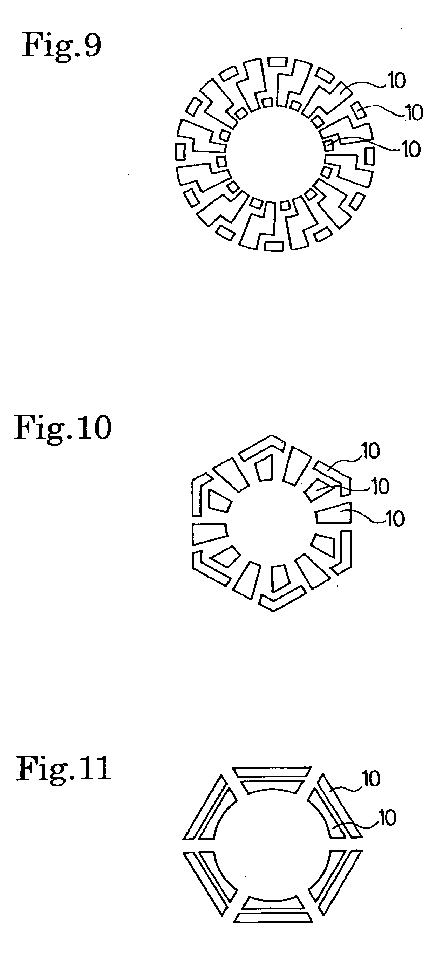

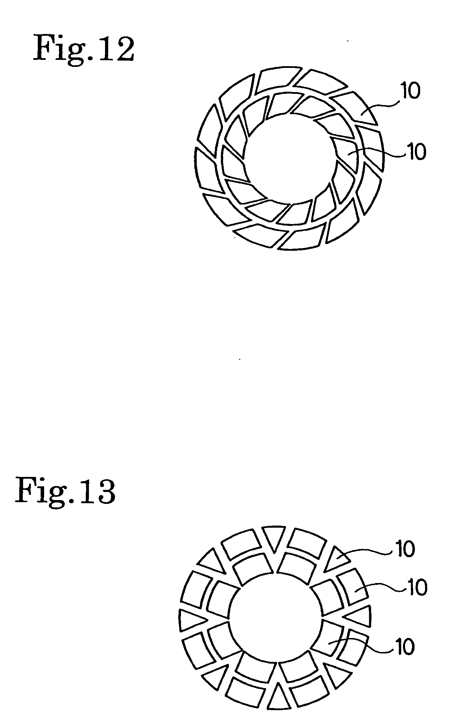

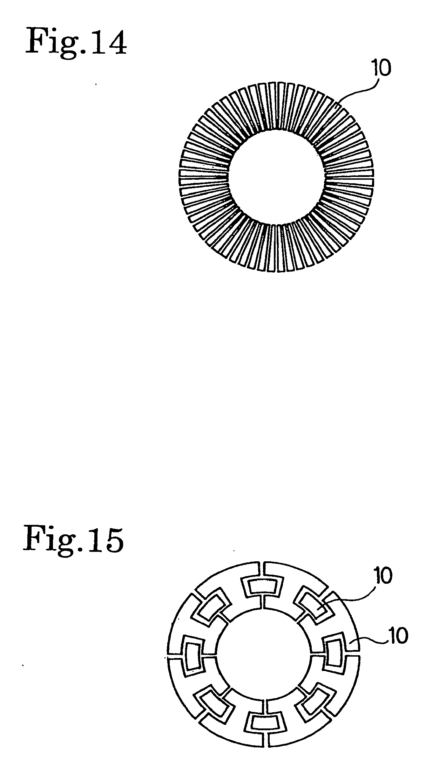

Figs. 7 to 15 are plan views illustrating protruding portions according to various modified examples of the present invention. In Fig. 7, each of the protruding portions 10 is a small piece with a shape extending radially. The plural protruding portions 10 together form a protruding-portion aggregate with substantially circular-shaped inner-side and outer-side contours. In Fig. 8, each of the protruding portions 10 is a small arc-shaped piece. The plural protruding portions 10 together form a protruding-portion aggregate with substantially circular-shaped inner-side and outer-side contours. Note that the protruding portions 10 in Fig. 3 are arranged into double circles while the protruding portions 10 in Fig. 8 are arranged into triple circles. In Fig. 9, some of the protruding portions 10 are small arc-shaped pieces and the others are small pieces each of which has a radially-extending shape. The plural protruding portions 10 together form a protruding-portion aggregate with substantially circular-shaped inner-side and outer-side contours. In each of Figs. 10 and 11, the plural protruding portions 10 together form a protruding-portion aggregate with a substantially circular-shaped inner-side contour and a substantially hexagon-shaped outer contour. In each of Figs. 12 to 15, the plural protruding portions 10 together form a protruding-portion aggregate with substantially circular-shaped inner-side and outer-side contours. All of these protruding portions 10 shown in Figs. 7 to 15 improve the visibility of the stud affixing portions and contribute to the excellence in the design of the tread portion 1.
A preferred embodiment of the present invention has been described thus far, but it should be understood that various modifications, substitutions, and replacement can be made to the above-described embodiment as long as such changes do not depart from the scope of the present invention defined by the accompanying claims.

### Examples

In a pneumatic tire with a tire size of 205/55R16 and with studs embedded in its tread portion, stud affixing positions are located in any of the blocks in the tread portion. Plural protruding portions are formed to surround, in a ring shape, each of the stud affixing positions. Tires of Examples 1 to 6 are fabricated with differences in the following properties described in Table 1: the shape of the protruding portions; the distance A from the outermost positions of the protruding portions to the outer-end position of the stud; and the height(s) B of the protruding portions from the tread surface of the tire. Two different values are given to Example 5 as the height (s) of the protruding portions from the tread surface of the tire as shown in Fig. 6. For comparative purposes, a tire with no protruding portions formed around the stud affixing positions is used as Conventional Example.

Following the testing methods to be described below, the visibility of the stud affixing positions, the stud holding ability, and the initial braking performance are assessed on the tires fabricated as above.

### Visibility of the Stud Affixing Positions:

Among 100 studs that are tried to be affixed to the test tire, the studs affixed to their respective correct positions are counted. The proportion of the correctly-affixed studs to the total 100 studs is calculated, and the assessment result is expressed as an index number with Conventional Example being 100. The larger the value of the index number is, the more excellent the visibility of the stud affixing positions is.

### Stud Holding Ability

Test tires with the studs affixed to are fitted to a vehicle of 2500cc-class displacement. With an inflation pressure of 230 kPa, the vehicle is made to travel 10000 km on an ordinary road, and then the studs that have been dropped off are counted. The reciprocal of the counted value is calculated, and the assessment result is expressed as an index number with the reciprocal for Conventional Example being 100. The larger the value of the index number is, the more excellent the stud holding ability is.

### Initial Braking Performance:

Test tires with the studs affixed to are fitted to a vehicle of 2500cc-class displacement. With an inflation pressure of 230 kPa, brake is put on the vehicle that is running at a speed of 40 km/h on ice, and then the braking distance is measured. The reciprocal of the measured value is calculated, and the assessment result is expressed as an index number with the reciprocal for Conventional Example being 100. The larger the value of the index number is, the more excellent the initial braking performance is.

**[Table 1]**

| | Conventional Example | Example 1 | Example 2 | Example 3 | Example 4 | Example 5 | Example 6 |
|---|---|---|---|---|---|---|---|
| Shape of Protruding Portions | - | Fig. 3 | Fig. 3 | Fig. 3 | Fig. 7 | Fig. 8 | Fig. 9 |
| Distance A of Protruding Portions (mm) | - | 5 | 5 | 5 | 5 | 5 | 5 |
| Height B of Protruding Portions (mm) | - | 0.3 | 0.5 | 0.6 | 0.5 | 0.3, 0.6 | 0.5 |
| Visibility | 100 | 103 | 105 | 106 | 106 | 107 | 109 |
| Stud Holding Ability | 100 | 101 | 102 | 103 | 102 | 103 | 103 |
| Initial Braking Performance | 100 | 101 | 102 | 103 | 102 | 103 | 103 |

Table 1 clearly shows, each of the tires of Examples 1 to 6 has more excellent both in the visibility of the stud affixing positions and in the stud holding ability than the tire of Conventional Example. In addition, each of Examples 1 to 6 has an improving effect on its initial braking performance in comparison to Conventional Example.

## Claims

1. A pneumatic tire in which a stud (20) may be embedded in a tread portion (1), the pneumatic tire comprising:
a stud affixing position that is located in the tread portion 1 **characterized in that**
a plurality of protruding portions are formed to surround, in a ring shape, the stud affixing position (7), wherein
each of the protruding portions has a height between 0.2 mm and 1.0 mm inclusive from a tread surface of the tire.

2. The pneumatic tire according to claim 1 wherein each of the protruding portions (10) is a small piece with any one of an arc shape and a shape extending radially.

3. The pneumatic tire according to any one of claims 1 and 2 wherein the protruding portions (10) are placed in an area that has a distance of 5 mm or smaller from the outer-end position of the stud.

4. The pneumatic tire according to any one of claims 1 to 3 wherein at least two different heights from the tread surface of the tire are given to the protruding portions (10).

5. The pneumatic tire according to any one of claims 1 to 4 wherein the protruding portions (10) together form a protruding-portion aggregate that has any one of a circular contour and a polygonal contour.

6. The pneumatic tire according to any one of claims 1 to 5 further comprising:
a plurality of longitudinal grooves that are formed in the tread portion (1) so as to extend in the circumferential direction of the tire;
a plurality of lateral grooves that are formed in the tread portion (1) so as to extend in the width direction of the tire;
a plurality of blocks (5) which are separated by the longitudinal grooves and by the lateral grooves and in any of which the stud affixing positions (7) are located; and
a plurality of sipes (6) formed in each of the blocks (5) at positions that are offset from the stud affixing position (7).

## Patentansprüche

1. Luftreifen, bei dem ein Spike (20) in einen Laufflächenabschnitt (1) eingefügt werden kann, der Luftreifen mit:
einer Spike-Befestigungsposition, die in dem Laufflächenabschnitt (1) angeordnet ist, **dadurch gekennzeichnet, dass**
mehrere vorstehende Abschnitte so ausgebildet sind, dass sie in einer Ringform die Spike-Befestigungsposition (7) umgeben, wobei
jeder der vorstehenden Abschnitte eine Höhe zwischen einschließlich 0,2 mm und 1,0 mm von einer Laufflächenoberfläche des Reifens aufweist.

2. Luftreifen nach Anspruch 1, bei dem jeder der vorstehenden Abschnitte (10) ein kleines Stück mit einer Bogenform oder einer Form, die sich radial erstreckt, ist.

3. Luftreifen nach einem der Ansprüche 1 und 2, bei dem die vorstehenden Abschnitte (10) in einer Fläche platziert sind, die einen Abstand von 5 mm oder weniger von der äußeren Endposition des Spikes aufweist.

4. Luftreifen nach einem der Ansprüche 1 bis 3, bei dem wenigstens zwei verschiedene Höhen von der Laufflächenoberfläche des Reifens für die vorstehenden Abschnitte (10) gewählt sind.

5. Luftreifen nach einem der Ansprüche 1 bis 4, bei dem die vorstehenden Abschnitte (10) zusammen ein Aggregat aus vorstehenden Abschnitten bilden, das eine kreisförmige Kontur oder eine vieleckige Kontur aufweist.

6. Luftreifen nach einem der Ansprüche 1 bis 5, ferner mit:
mehreren Längsnuten, die in dem Laufflächenabschnitt (1) so ausgebildet sind, dass sie sich in der Umfangsrichtung des Reifens erstrecken,
mehreren Seitennuten, die in dem Laufflächenabschnitt (1) so ausgebildet sind, dass sie sich in der Breitenrichtung des Reifens erstrecken,
mehreren Blöcken (5), welche durch die Längsnuten und die Seitennuten getrennt sind und in jedem von denen die Spike-Befestigungspositionen (7) angeordnet sind, und
mehreren Feineinschnitten (6), die in jedem der Blöcke (5) an Positionen ausgebildet sind, die von den Spike-Befestigungspositionen versetzt sind.

## Revendications

1. Pneu pneumatique dans lequel un crampon (20) peut être incorporé dans une partie formant bande de roulement (1), le pneu pneumatique comprenant :
une position de fixation de crampon qui est située dans la partie formant bande de roulement 1 **caractérisée en ce que**
une pluralité de parties saillantes sont formées pour entourer, en une forme d'anneau, la position de fixation de crampon (7), dans laquelle
chacune des parties saillantes a une hauteur entre 0,2 mm et 1,0 mm y compris à partir d'une surface de bande de roulement du pneu.

2. Pneu pneumatique selon la revendication 1, dans lequel chacune des parties saillantes (10) est une petite pièce ayant l'une quelconque d'une forme d'arc et d'une forme s'étendant radialement.

3. Pneu pneumatique selon l'une quelconque des revendications 1 et 2, dans lequel les parties saillantes (10) sont placées dans une zone qui est à une distance de 5 mm ou moins de la position d'extrémité extérieure du crampon.

4. Pneu pneumatique selon l'une quelconque des revendications 1 à 3, dans lequel au moins deux hauteurs différentes à partir de la surface de bande de roulement du pneu sont données aux parties saillantes (10).

5. Pneu pneumatique selon l'une quelconque des revendications 1 à 4, dans lequel les parties saillantes (10) forment ensemble un agrégat formant partie saillante qui a l'un quelconque d'un contour circulaire et d'un contour polygonal.

6. Pneu pneumatique selon l'une quelconque des revendications 1 à 5, comprenant en outre :
une pluralité de rainures longitudinales qui sont formées dans la partie formant bande de roulement (1) de façon à s'étendre dans la direction circonférentielle du pneu ;
une pluralité de rainures latérales qui sont formées dans la partie formant bande de roulement (1) de façon à s'étendre dans la direction de largeur du pneu ;
une pluralité de blocs (5) qui sont séparés par les rainures longitudinales et par les rainures latérales et dans l'une quelconque desquelles les positions de fixation de crampon (7) sont situées ; et
une pluralité de lamelles (6) formées dans chacun des blocs (5) à des positions qui sont décalées par rapport à la position de fixation de crampon (7).
